# EUROPEAN PATENT APPLICATION

(11) **EP 4 304 269 A1**
(43) Date of publication of application: **10.01.2024**
(21) Application number: 22762910.2
(22) Date of filing: 08.02.2022
(51) Int. Cl.: H04W 72/04, H04W 92/18, H04W 4/40, H04W 76/14

(54) **TERMINAL DEVICE, BASE STATION DEVICE, AND COMMUNICATION METHOD**

(30) Priority: 01.03.2021 JP 2021031593
(71) Applicant: Sony Group Corporation, Tokyo 108-0075 (JP)
(72) Inventor: SHIMEZAWA, Kazuyuki, Tokyo 108-0075 (JP); UCHIYAMA, Hiromasa, Tokyo 108-0075 (JP); KUSASHIMA, Naoki, Tokyo 108-0075 (JP)
(74) Representative: Witte, Weller & Partner Patentanwälte mbB
(86) International application number: PCT/JP2022/004831
(87) International publication number: WO 2022/185853

(57) **Abstract**

A terminal device (200) performs sidelink communication with another terminal device. The terminal device (200) includes a control unit (240). The control unit (240) acquires resource pool information regarding a resource pool allocated by a base station device (100) for sidelink communication with another terminal device. The control unit (240) transmits control information to another terminal device by using at least one of a plurality of sidelink control channels allocated to a slot included in the resource pool in a time axis direction.

## Description

### Field

The present disclosure relates to a terminal device, a base station device, and a communication method. Background

In 3GPP, device-to-device (D2D) communication for performing direct communication between terminals (UEs) is standardized as sidelink communication in 4G long term evolution (LTE) and 5G new radio (NR), respectively. In the sidelink communication, vehicle-to-everything (V2X) communication is one of main use cases. As the V2X communication, vehicle-to-vehicle (V2V), vehicle-to-infrastructure (V2I), vehicle-to-pedestrian (V2P), and vehicle-to-network (V2N) are assumed.

In particular, platooning, advanced driving, extended sensor, and remote driving have been studied as specific use cases of the V2X communication in 5G NR. In addition, as a requirement for URLLC in the V2X communication, a standard is formulated so as to realize a delay of 10 milliseconds or less and reliability of 99.999%.

Furthermore, the sidelink communication is not limited to the V2X communication, and can be utilized in various use cases. For example, an automation factory is one of use cases in which the sidelink communication can be utilized. In such a factory, it is examined that a large number of devices such as sensors and cameras are installed for direct communication with each other.

### Citation List

### Non Patent Literature

Non Patent Literature 1: "3GPP TS22.186 version 16.2.0 Release 16", [online], [Searched on February 19, 2021], Internet <https://www.3gpp.org/ftp//Specs/archive/22_series/22.186/2 2186-g20.zip>
Non Patent Literature 2: "3GPP TS22.104 version 17.4.0 Release 17", [online], [Searched on February 19, 2021], Internet <https://www.3gpp.org/ftp//Specs/archive/22_series/22.104/2 2104-h40.zip>

### Summary

### Technical Problem

As described above, although inter-vehicle communication has been considered in the V2X communication, intra-vehicle communication can be proposed as a technical extension in future sidelink communication. In the intra-vehicle communication, for example, sensors and camera modules that have been connected to each other by wire can be connected to each other, as wireless communication devices, by wireless communication. In particular, it is expected that the number of these devices such as sensors and camera modules will rapidly increase as automatic driving and the like are realized. Therefore, it is considered that there is an increasing demand for connecting the sensors and camera modules to each other by wireless communication.

With respect to the automatic driving, it is basically important to control a vehicle based on data from a sensor or a camera in an own vehicle, and information obtained by the inter-vehicle communication (i.e., conventional V2X communication) is utilized as auxiliary information. Therefore, the intra-vehicle communication is required to have a lower delay than the inter-vehicle communication.

Furthermore, also in the automation factory described above, a lower delay is required, in particular, when a production line is frequently changed according to what is to be manufactured.

As described above, a lower delay is required in the sidelink communication.

Therefore, the present disclosure provides a mechanism capable of realizing the sidelink communication with lower delay.

Note that the above problem or object is merely one of a plurality of problems or objects that can be solved or achieved by a plurality of embodiments disclosed in the present specification.

### Solution to Problem

According to the present disclosure, a terminal device is provided. The terminal device performs sidelink communication with another terminal device. The terminal device includes a control unit. The control unit acquires resource pool information regarding a resource pool allocated by a base station device for sidelink communication with another terminal device. The control unit transmits control information to another terminal device by using at least one of a plurality of sidelink control channels allocated to a slot included in the resource pool in a time axis direction.

### Brief Description of Drawings

FIG. 1 is a diagram illustrating an example of a frame configuration in sidelink communication.
FIG. 2 is a diagram illustrating an example of the frame configuration in the sidelink communication.
FIG. 3 is a diagram illustrating an example of a schematic configuration of a communication system according to an embodiment of the present disclosure.
FIG. 4 is a block diagram illustrating a configuration example of a base station device according to the embodiment of the present disclosure.
FIG. 5 is a block diagram illustrating a configuration example of a terminal device according to the embodiment of the present disclosure.
FIG. 6 is a diagram illustrating a configuration example of a subslot according to the embodiment of the present disclosure.
FIG. 7 is a diagram illustrating a configuration example of the subslot according to the embodiment of the present disclosure.
FIG. 8 is a diagram illustrating a configuration example of the subslot according to the embodiment of the present disclosure.
FIG. 9 is a diagram illustrating a configuration example of a subslot according to the embodiment of the present disclosure.
FIG. 10 is a diagram illustrating an example of an HARQ feedback according to the embodiment of the present disclosure.
FIG. 11 is a diagram illustrating an example of the HARQ feedback according to the embodiment of the present disclosure.
FIG. 12 is a diagram illustrating an example of a method of notifying assist information according to the embodiment of the present disclosure.
FIG. 13 is a diagram illustrating an example of a sensing method according to the embodiment of the present disclosure.

### Description of Embodiments

Hereinafter, an embodiment of the present disclosure will be described in detail with reference to the accompanying drawings. Note that, in the present specification and the drawings, components having substantially the same functional configuration are denoted by the same reference signs to omit redundant description.

In the present specification and the drawings, similar components in the embodiment may be distinguished by adding a different alphabet or number after the same reference sign. However, when it is not necessary to particularly distinguish each of similar components, only the same reference sign is assigned.

In the description below, one or more embodiments (including examples and modifications) can be implemented independently. On the other hand, at least some of the plurality of embodiments described below may be appropriately combined with at least some of other embodiments. The plurality of embodiments may include novel features different from each other. Therefore, the plurality of embodiments can contribute to solving different objects or problems, and can exhibit different effects.

Note that the description will be given in the following order.
1. Introduction
1.1. Problem
1.2. Outline of proposed technology
1.3. Definition
2. Configuration of communication system
2.1. Overall configuration of communication system
2.2. Configuration of base station device
2.3. Configuration of terminal device
3. Sidelink communication using subslot
3.1. Definition of subslot
3.2. Resource allocation method
3.3. HARQ Feedback
3.4. Sharing sensing information
3.5. Sensing method
4. Summary

### <<1. Introductions

### <1.1. Problem>

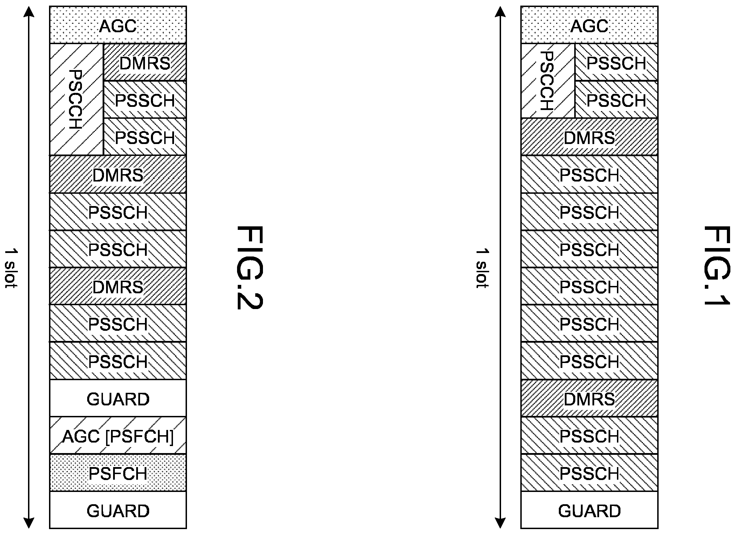

First, a frame configuration in conventional sidelink communication will be described. FIGS. 1 and 2 are diagrams illustrating examples of the frame configuration in the sidelink communication.

As illustrated in FIGS. 1 and 2, in the sidelink communication in 3GPP, signal transmission and reception have been performed based on a frame configuration having a slot including 14 symbols as a minimum unit. Here, when a subcarrier interval is 15 kHz, a time length of one slot is one millisecond.

As described above, in the conventional sidelink communication, V2X communication is mainly assumed as a use case, and a delay condition (delay requirement) required in the conventional sidelink communication is ten milliseconds. Therefore, there is no problem even when the frame configuration adopted in the sidelink communication is a frame configuration in which one slot is the minimum unit as illustrated in FIGS. 1 and 2.

However, in future sidelink communication, it is conceivable that an ultra-low delay is required, for example, less than one millisecond. Therefore, the frame configuration adopted in the conventional sidelink communication cannot support a use case that requires a low delay.

### <1.2. Outline of proposed technology>

Therefore, in a proposed technology of the present disclosure, it is assumed that the communication system performs the sidelink communication based on a subslot including a symbol shorter than the slot. In the proposed technology of the present disclosure, one slot includes a plurality of subslots. A sidelink control channel may be allocated to each of the plurality of subslots. More specifically, in the proposed technology of the present disclosure, a plurality of sidelink control channels may be allocated to one slot. In other words, a plurality of sidelink control channels may be discontinuously allocated to one slot.

A terminal device that transmits a control signal by using the sidelink communication obtains resource pool information regarding a resource pool used for the sidelink communication from a base station device. The terminal device transmits control information by using at least one of the plurality of sidelink control channels that can be allocated to one slot based on the resource pool information obtained.

As described above, the terminal device according to the proposed technology of the present disclosure can perform the sidelink communication using the subslot shorter than one slot by transmitting the control information using at least one of the plurality of sidelink control channels that can be allocated to one slot. As a result, the communication system according to the proposed technology of the present disclosure can further shorten a delay of the sidelink communication.

### <1.3. Definition>

The sidelink communication in the proposed technology of the present disclosure is based on radio access systems of LTE V2X and NR V2X, and their overall description is set out in 3GPP TR37.985.

Here, in the proposed technology of the present disclosure, a group of sidelink channels and/or signals transmitted from a terminal device (Tx UE) on a certain transmission side to a terminal device (Rx UE) on a reception side by unicast, groupcast, or broadcast is defined as one sidelink communication.

In other words, in an example in FIG. 1, auto gain control (AGC), physical sidelink control channel (PSCCH), physical sidelink shared channel (PSSCH), demodulation reference signal (DMRS), and GUARD transmitted in all symbols in one slot are defined as one sidelink transmission.

In the example in FIG. 2, AGC, PSCCH, PSSCH, DMRS, and GUARD transmitted in the first to eleventh symbols in one slot are defined as one sidelink transmission. In the example in FIG. 2, AGC, physical sidelink feedback channel (PSFCH), and GUARD transmitted in the 12th to 14th symbols in one slot are defined as one sidelink transmission. In this way, a plurality of sidelink transmissions may be included in one slot.

Note that the same Tx UE can continuously perform the plurality of sidelink transmissions. In this case, it is assumed that each of the plurality of sidelink transmissions is different sidelink transmission.

### <<2. Configuration of communication system>>

### <2.1. Overall configuration of communication system>

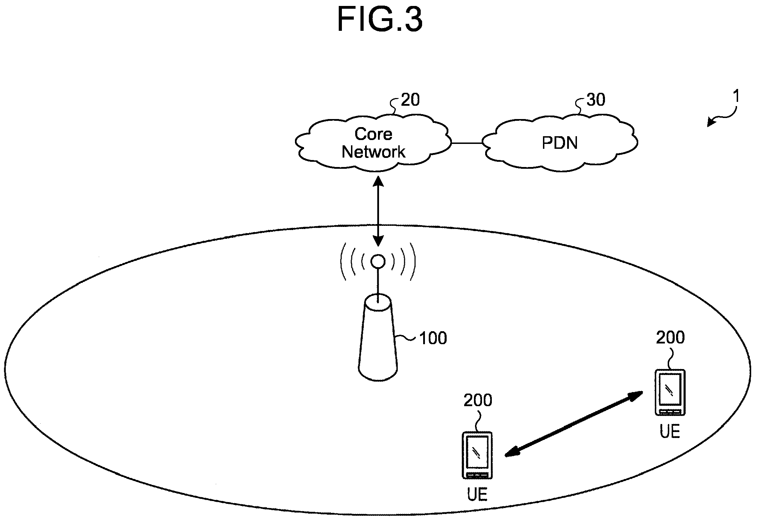

Next, an example of a schematic configuration of a communication system 1 to which the proposed technology is applied will be described with reference to FIG. 3. FIG. 3 is a diagram illustrating the example of the schematic configuration of the communication system 1 according to the embodiment of the present disclosure. As illustrated in FIG. 3, the communication system 1 includes a base station device 100, a terminal device 200, a core network 20, and a packet data network (PDN) 30.

Here, the communication system 1 may be a cellular communication system such as wideband code division multiple access (W-CDMA), code division multiple access 2000 (cdma2000), LTE, or NR. In the following description, the LTE includes LTE-Advanced (LTE-A), LTE-Advanced Pro (LTE-A Pro), and evolved universal terrestrial radio access (EUTRA). In addition, the NR includes new radio access technology (NRAT) and further EUTRA (FEUTRA).

The NR is the next generation (fifth generation) radio access technology (RAT) of LTE. The NR is the radio access technology that can support various use cases including enhanced mobile broadband (eMBB), massive machine type communications (mMTC), and ultra-reliable and low latency communications (URLLC).

Note that the communication system 1 is not limited to the cellular communication system. For example, the communication system 2 may be another radio communication system such as a wireless local area network (LAN) system, a television broadcasting system, an aviation radio system, or a space radio communication system.

The base station device 100 is a communication apparatus that operates a cell 11 and provides a wireless service to one or more terminal devices 200 located within a coverage of the cell 11. The cell 11 can be operated according to any wireless communication system such as the LTE or NR. The base station device 100 is connected to a core network 20. The core network 20 is connected to a PDN 30.

Note that the base station device 100 may include a group of a plurality of physical or logical devices. For example, in the embodiment of the present disclosure, the base station device 100 may be distinguished into a plurality of devices of a baseband unit (BBU) and a radio unit (RU), and may be interpreted as an assembly of the plurality of devices. Further or alternatively, in the embodiment of the present disclosure, the base station device 100 may be either or both of the BBU and the RU. The BBU and the RU may be connected by a predetermined interface (e.g., eCPRI). Further or alternatively, the RU may be referred to as a remote radio unit (RRU) or a radio DoT (RD). Further or alternatively, the RU may correspond to a gNB-DU described later. Further or alternatively, the BBU may correspond to a gNB-CU described later. Further or alternatively, the RU may be an apparatus integrally formed with an antenna. The antenna (e.g., antenna integrally formed with the RU) included in the base station device 100 may adopt an advanced antenna system and support MIMO (e.g., FD-MIMO) or beamforming. In the advanced antenna system, the antenna (e.g., antenna integrally formed with the RU) included in the base station device 100 may include, for example, 64 transmission antenna ports and 64 reception antenna ports.

Note that a plurality of base station devices 100 may be connected to each other. A radio access network (RAN) may include one or more base station devices 100. In other words, the base station device 100 may be simply referred to as a RAN, a RAN node, an access network (AN), or an AN node. The RAN in the LTE is referred to as an enhanced universal terrestrial RAN (EUTRAN). The RAN in the NR is referred to as NGRAN. The RAN in the W-CDMA (UMTS) is referred to as UTRAN. The base station device 100 of the LTE is referred to as an evolved node B (eNodeB) or an eNB. In other words, the EUTRAN includes one or more eNodeBs (eNBs). Still more, the base station device 100 of NR is referred to as a gNodeB or a gNB. In other words, the NGRAN includes one or more gNBs. Furthermore, the EUTRAN may include the gNB (en-gNB) connected to the core network (EPC) in an LTE communication system (EPS). Similarly, the NGRAN may include an ng-eNB connected to a core network 5GC in a 5G communications system (5GS). Further or alternatively, when the base station device 100 is the eNB, the gNB, or the like, it may be referred to as a 3GPP access. Further or alternatively, when the base station device 100 is a wireless access point, it may be referred to as a non-3GPP access. Further or alternatively, further or alternatively, the base station device 100 may be an optical extension device called a remote radio head (RRH). Further or alternatively, when the base station device 100 is the gNB, the base station device 100 may be referred to as a combination of the above-described gNB central unit (CU) and gNB distributed unit (DU) or any one of them. Here, the gNB-CU hosts a plurality of upper layers (e.g., RRC, SDAP, PDCP) in an access stratum for communication with the UE. On the other hand, the gNB-DU hosts a plurality of lower layers (e.g., RLC, MAC, PHY) in the access stratum. In other words, among messages and information described later, RRC signaling (e.g., various SIBs including MIB and SIB1, an RRC setup message, and an RRC reconfiguration message.) may be generated by the gNB CU, while DCI and various physical channels (e.g., PDCCH and PBCH) described later may be generated by the gNB-DU. Alternatively, in the RRC signaling, for example, some configurations such as IE: cellGroupConfig may be generated by the gNB DU, and the remaining configurations may be generated by the gNB CU. These configurations may be transmitted and received by an F1 interface described later. Note that the base station device 100 may be configured to be able to communicate with another base station device 100. For example, when the plurality of base station devices 100 is eNBs or a combination of the eNB and the en-gNB, the base station devices 100 may be connected by an X2 interface. Further or alternatively, when the plurality of base station devices 100 is the gNBs or a combination of the gn-eNB and the gNB, the devices may be connected by an Xn interface. Further or alternatively, when the plurality of base station devices 100 is a combination of the gNB CU and the gNB DU, the devices may be connected by the above-described F1 interface. The message and information (RRC signaling or DCI information and physical channel) described later may be communicated between the plurality of base stations (e.g. via the X2, Xn, or F1 interface).

Further, as described above, the base station device 100 may be configured to manage a plurality of cells. The cell provided by the base station device 100 is referred to as a serving cell. The serving cell may include a primary cell (pCell) and a secondary cell (sCell). When dual connectivity (e.g., EUTRA-EUTRA dual connectivity, EUTRA-NR dual connectivity (ENDC), EUTRA-NR dual connectivity with 5GC, NR-EUTRA dual connectivity (NEDC), or NR-NR dual connectivity.) is provided to the UE (e.g., terminal device 200), the PCell and zero or one or more SCells provided by a master node (MN) are referred to as a master cell group. Further, the serving cell may include a primary secondary cell (PSCell) or primary SCG cell. In other words, when the dual connectivity is provided to the UE, the PSCell and zero or one or more SCells provided by a secondary node (SN) are referred to as a secondary cell group (SCG). Unless specially configured (e.g., PUCCH on SCell), a physical uplink control channel (PUCCH) is transmitted in the PCell and the PSCell, but is not transmitted in the SCell. In addition, a radio link failure is also detected in the PCell and the PSCell, but is not detected (may not be detected) in the SCell. As described above, since the PCell and the PSCell have a special role in the serving cell(s), they are also referred to as a special cell (SpCell). One downlink component carrier and one uplink component carrier may be associated with one cell. Further, a system bandwidth corresponding to one cell may be divided into a plurality of bandwidth parts (BWP). In this case, one or more bandwidth parts may be configured for the UE, and one bandwidth part may be used for the UE as an active BWP. In addition, radio resources that can be used by the terminal device 200 (e.g., frequency bandwidth, numerology (subcarrier spacing), and slot configuration) may be different for each cell, each component carrier, or each BWP.

When a core network 120 is an NR core network (5G Core (5GC)), the core network 120 may include an access and mobility management function (AMF), a session management function (SMF), a user plane function (UPF), a policy control function (PCF), and a unified data management (UDM) .

When the core network 120 is an LTE core network (evolved packet core (EPC)), the core network 120 may include a mobility management entity (MME), a serving gateway (S-GW), a PDN gateway (P-GW), a policy and charging rule function (PCRF), and a home subscriber server (HSS). The AMF and the MME are control nodes that handle control plane signals, and manage mobility of a terminal device 40. The UPF and the S-GW/P-GW are nodes that handle user plane signals. The PCF/PCRF is a control node that performs control related to a policy and charging such as quality of service (QoS) for a PDU session or a bearer. The UDM/HSS is a control node that handles subscriber data and performs service control.

The terminal device 200 is a wireless communication apparatus that performs wireless communication with other devices. A terminal device 110 is, for example, a sensor or a camera device having a communication function, a mobile phone, a smart device (smartphone or tablet), a personal digital assistant (PDA), or a personal computer. The terminal device 110 may be a head mounted display, VR goggles, or the like having a function of wirelessly transmitting and receiving data.

For example, the terminal device 200 wirelessly communicates with another terminal device 200 according to control by the base station device 100 or autonomously. In this case, the terminal device 200 transmits a sidelink signal to another terminal device 200 in a PC5 link, and receives the sidelink signal from this another terminal device 200. Hereinafter, transmission and reception of the sidelink signal by the terminal device 200 will be collectively referred to as the sidelink communication. When performing the sidelink communication, the terminal device 200 may be capable of using an automatic retransmission technology such as hybrid automatic repeat request (HARQ).

The terminal device 200 may be capable of non-orthogonal multiple access (NOMA) communication with the base station device 100. Note that the terminal device 200 may also be capable of the NOMA communication in communication (sidelink) with other terminal devices 200. Furthermore, the terminal device 200 may be capable of low power wide area (LPWA) communication with other communication apparatuses (e.g., base station device 100 and other terminal devices 200). In addition, the wireless communication used by the terminal device 200 may be wireless communication using millimeter waves or terahertz waves. Note that the wireless communication (including sidelink communication) used by the terminal device 200 may be wireless communication using radio waves or wireless communication using infrared rays or visible light (optical communication).

### <2.2. Configuration of base station device>

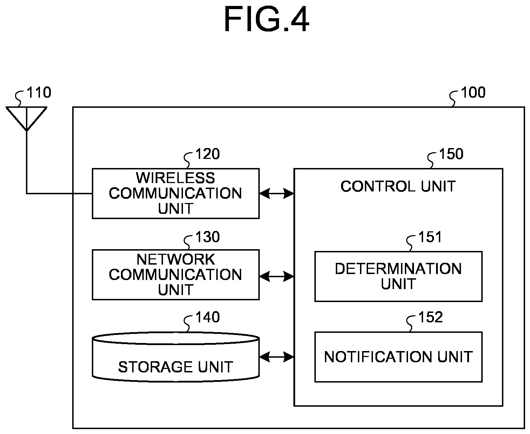

FIG. 4 is a block diagram illustrating a configuration example of the base station device 100 according to the embodiment of the present disclosure. Referring to FIG. 4, the base station device 100 includes an antenna unit 110, a wireless communication unit 120, a network communication unit 130, a storage unit 140, and a control unit 150.

### (1) Antenna unit 110

The antenna unit 110 radiates a signal output from the wireless communication unit 120 into space as a radio wave. Furthermore, the antenna unit 110 converts a radio wave in the space into a signal and outputs the signal to the wireless communication unit 120. Note that the antenna unit 110 of the present embodiment includes a plurality of antenna elements and can form a beam.

### (2) Wireless communication unit 120

The wireless communication unit 120 transmits and receives signals. For example, the wireless communication unit 120 transmits a downlink signal to the terminal device 200 and receives an uplink signal from the terminal device 200. Note that the wireless communication unit 120 of the present embodiment can communicate with the terminal device 200 using a plurality of beams formed by the antenna unit 110.

### (3) Network communication unit 130

The network communication unit 130 transmits and receives information. For example, the network communication unit 130 transmits information to other nodes and receives information from other nodes. For example, the above other nodes include another base station device 100 and a core network node.

### (4) Storage unit 140

The storage unit 140 temporarily or permanently stores programs and various pieces of data for the operation of the base station device 100.

### (5) Control unit 150

The control unit 150 controls the entire operation of the base station device 100 and provides various functions of the base station device 100. The control unit 150 includes a determination unit 151 and a notification unit 152.

### (5-1) Determination unit 151

For example, the determination unit 151 determines a resource pool to be used by the terminal device 200 for the sidelink communication. Furthermore, the determination unit 151 may determine whether or not the terminal device 200 performs the sidelink communication using the subslot. In this case, the determination unit 151 determines whether or not the terminal device 200 uses the subslot based on, for example, a delay condition required in the sidelink communication. Alternatively, the determination unit 151 may determine whether or not the terminal device 200 uses the subslot based on capability information of the terminal device 200 including whether or not the sidelink communication using the subslot is possible.

### (5-2) Notification unit 152

The notification unit 152 notifies the terminal device 200 of a determination result of the determination unit 151. For example, the terminal device 200 notifies the resource pool information regarding the resource pool used for the sidelink communication. In addition, the notification unit 152 notifies information indicating whether or not the terminal device 200 uses the subslot. In addition to this, the notification unit 152 may notify setting information regarding sensing performed by the terminal device 200 during the sidelink communication.

In this manner, the notification unit 152 notifies the terminal device 200 of information regarding the sidelink communication performed by the terminal device 200. Note that the information is determined, for example, by the determination unit 151.

The control unit 150 may further include a component other than these components. In other words, the control unit 150 can also perform operations other than the operations of these components.

### <2.3. Configuration of terminal device>

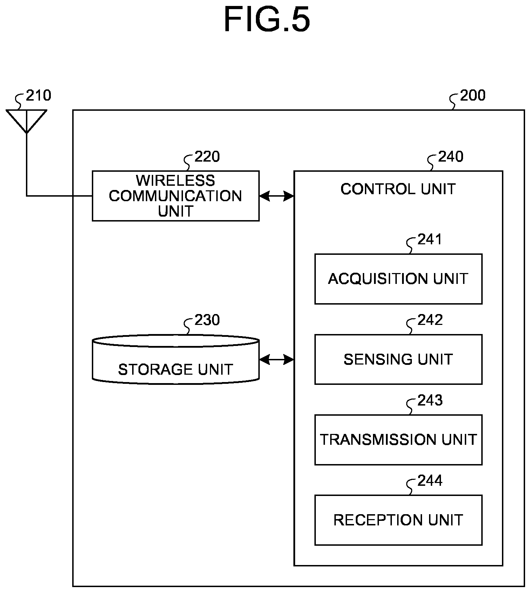

FIG. 5 is a block diagram illustrating a configuration example of the terminal device 200 according to the embodiment of the present disclosure. Referring to FIG. 5, the terminal device 200 includes an antenna unit 210, a wireless communication unit 220, a storage unit 230, and a control unit 240.

### (1) Antenna unit 210

The antenna unit 210 radiates a signal output from the wireless communication unit 220 into space as a radio wave. Furthermore, the antenna unit 210 converts a radio wave in the space into a signal and outputs the signal to the wireless communication unit 220. Note that the antenna unit 210 of the present embodiment includes a plurality of antenna elements and can form a beam.

### (2) Wireless communication unit 220

The wireless communication unit 220 transmits and receives signals. For example, the wireless communication unit 220 receives the downlink signal from the base station device 100 and transmits the uplink signal to the base station device 100. Note that the wireless communication unit 220 of the present embodiment can communicate with the base station device 100 using a plurality of beams formed by the antenna unit 210.

### (3) Storage unit 230

The storage unit 230 temporarily or permanently stores programs and various pieces of data for the operation of the terminal device 200.

### (4) Control unit 240

The control unit 240 controls the entire operation of the terminal device 200 and provides various functions of the terminal device 200. The control unit 240 includes an acquisition unit 241, a sensing unit 242, a transmission unit 243, and a reception unit 244.

### (4-1) Acquisition unit 241

For example, the acquisition unit 241 acquires information regarding the sidelink communication transmitted by the base station device 100. The information includes information regarding the resource pool used in sidelink communication and information instructing whether or not to use a subslot in the sidelink communication.

Note that, here, the acquisition unit 241 acquires the information regarding the sidelink communication from the base station device 100, but the present invention is not limited thereto. For example, the acquisition unit 241 may acquire these pieces of information from another terminal device 200. In this case, this another terminal device 200 may be a master terminal device that controls the sidelink communication of the terminal device 200.

Furthermore, here, the base station device 100 determines whether or not to use the subslot in the sidelink communication of the terminal device 200, but the present invention is not limited thereto. For example, the terminal device 200 may determine whether or not to use the subslot in the sidelink communication. In this case, the acquisition unit 241 can acquire, from the base station device 100, information (e.g., capability information of the Rx UE.) for determining whether or not to use the subslot in the sidelink communication. Alternatively, the acquisition unit 241 may acquire the information from the Rx UE or another terminal device 200.

### (4-2) Sensing unit 242

The sensing unit 242 performs sensing for the transmission unit 243 to perform sidelink transmission. The sensing unit 242 performs sensing according to the setting information regarding sensing acquired by the acquisition unit 242. The sensing unit 242 outputs a sensing result to the transmission unit 243.

### (4-3) Transmission unit 243

For example, when the terminal device 200 operates as the Tx UE, the transmission unit 243 performs the sidelink transmission using the information acquired by the acquisition unit 241 based on the sensing result of the sensing unit 242. The transmission unit 243 performs the sidelink transmission via the wireless communication unit 220.

Note that details of the sidelink transmission using the subslot will be described later.

### (4-4) Reception unit 244

For example, when the terminal device 200 operates as the Rx UE, the reception unit 244 receives a signal from the Tx UE. The reception unit 244 receives the signal via the wireless communication unit 220.

The control unit 240 may further include a component other than these components. In other words, the control unit 240 can also perform operations other than the operations of these components.

### <<3. Sidelink communication using subslot>>

Next, details of the sidelink transmission (sidelink communication) using the subslot will be described.

### <3.1. Definition of subslot>

### (1) Setting subslot explicitly

First, a case where the subslot common to a plurality of terminal devices 200 is explicitly set (or defined) will be described.

In this method, the subslot common to the plurality of terminal devices 200 is set. The plurality of terminal devices 200 may be all terminal devices 200 included in the cell of the base station device 100, or may be the terminal device 200 belonging to a predetermined group (UE group). Alternatively, the plurality of terminal devices 200 may be a plurality of terminal devices 200 to which the same resource pool is set.

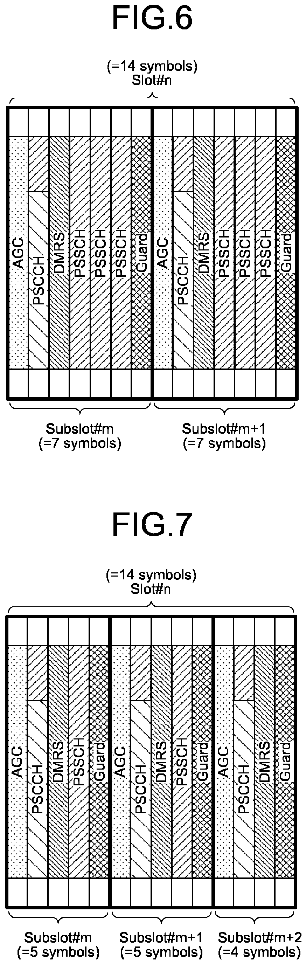

Here, a configuration example of the subslot according to the embodiment of the present disclosure will be described with reference to FIGS. 6 and 7. FIGS. 6 and 7 are diagrams illustrating the configuration examples of the subslot according to the embodiment of the present disclosure. Here, a subslot configuration when the subslot is explicitly set with respect to the terminal device 200 is illustrated.

In FIG. 6, a slot of 14 symbols (Slot#n) includes two subslots (Subslot#m and Subslot#m+1) each including seven symbols. As described above, in the embodiment of the present disclosure, a plurality of subslots having the same size (the number of symbols) can be arranged in one slot.

In FIG. 7, a slot of 14 symbols (Slot#n) includes three subslots (Subslot#m, Subslot#m+1, and Subslot#m+2). The Subslot#m and the Subslot#m+1 include five symbols, and the Subslot#m+2 includes four symbols. In this manner, a plurality of subslots having different sizes (the number of symbols) may be arranged in one slot.

In FIG. 7, the subslots (Subslot#m, Subslot#m+1, Subslot#m+2) have five, five, and four symbols, respectively, but the number of symbols is not limited thereto. The number of symbols in the subslot may be three or less or six or more. Furthermore, for example, the number of symbols in the subslot can be a predetermined number less than 14.

FIGS. 6 and 7 illustrate a case where AGC, PSCCH, PSSCH, DMRS, and GUARD are transmitted as the subslot transmission, but the present invention is not limited thereto. AGC, PSFCH, and GUARD may be transmitted in one subslot.

The subslot configuration illustrated in FIG. 6 or 7 can be set, for example, in the following manner.
(a) Method predefined in the specification
(b) Method configured by the base station device or the master UE
(c) Method in which one of the plurality of subslot configurations is set

### (a) Method predefined in the specification

In this method, for example, one subslot configuration is defined in advance in the specification. The base station device 100 or the master UE notifies that the sidelink communication is performed using the subslot configuration defined in the specification. As a result, the sidelink communication using the subslot configuration is set.

### (b) Method configured by the base station device or the master UE

In this method, the base station device 100 or a predetermined UE (hereinafter, also referred to as the master UE) notifies the terminal device 200 of the setting information indicating a predetermined subslot configuration. As a result, the sidelink communication using the predetermined subslot configuration is set.

### (c) Method in which one of the plurality of subslot configurations is set

In this method, the plurality of subslot configurations is defined in advance. The base station device 100 or the master UE notifies information (e.g., index information) indicating one of the plurality of subslot configurations. As a result, the sidelink communication using one of the plurality of subslot configurations is set.

Note that the plurality of subslot configurations may be defined in advance in the specification, or may be defined by the base station device 100 or the master UE.

The channels and/or signals in one sidelink transmission are mapped into one subslot. In other words, the sidelink transmission is performed based on the subslot.

Note that each sidelink transmission is performed in units of subslots, but it is not necessary to transmit using all symbols in the subslot. The terminal device 200 can perform the sidelink transmission using at least some symbols in the subslot. For example, when one subslot includes seven symbols, the terminal device 200 may perform the sidelink transmission using five symbols among the seven symbols.

In this case, the AGC or the PSCCH is allocated to a predetermined symbol in the subslot. For example, the AGC is mapped to a first symbol in the subslot regardless of the number of symbols used for the sidelink transmission. Further, for example, the PSCCH is mapped to a second symbol in the subslot regardless of the number of symbols used for the sidelink transmission.

The symbol to which the AGC or the PSCCH is allocated can be set semi-static by the base station device 100 or the master UE. In this case, the base station device 100 or the master UE performs setting related to a symbol to which AGC or PSCCH is allocated, for example, through signaling (e.g., RRC or MAC) in an upper layer as viewed from a physical layer. Alternatively, the base station device 100 or the master UE may perform the setting through signaling in the physical layer (e.g., sidelink control information (SCI) or downlink control information (DCI)).

### (2) Setting subslot implicitly

Next, a case where implicit setting (or defining) is performed based on resource allocation of a predetermined channel or signal will be described.

In this method, the base station device 100 or the master UE transmits allocation information regarding resource allocation of a predetermined sidelink channel or a signal to a certain terminal device 200. When the terminal device 200 performs the sidelink transmission based on the allocation information, the sidelink transmission using the subslot is implicitly performed.

In this method, the subslot may not be explicitly defined. This method is different from the conventional method in that a plurality of sidelink transmissions using different symbols can be performed in one slot.

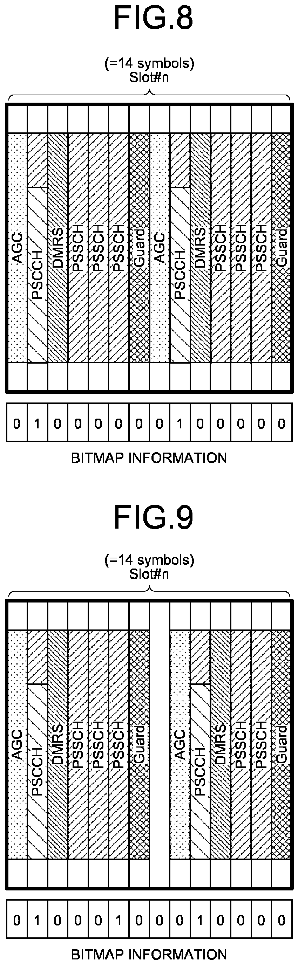

Here, an example of a configuration of the subslot according to the embodiment of the present disclosure will be described with reference to FIGS. 8 and 9. FIGS. 8 and 9 are diagrams illustrating examples of the subslot configuration according to the embodiment of the present disclosure. Here, the subslot configuration when the subslot is implicitly set with respect to the terminal device 200 is illustrated.

The examples in FIGS. 8 and 9 illustrate bitmap information indicating symbols to which the PSCCH is mapped in a 14-bit slot (slot#n). The bitmap information is an example of the allocation information transmitted by the base station device 100 or the master UE.

Note that the number of symbols (e.g., from symbol AGC to symbol Guard) in the entire sidelink transmission is arbitrarily determined for each sidelink transmission by the terminal device 200 (Tx UE) that performs the sidelink transmission. Alternatively, the number of symbols may be implicitly determined based on the bitmap information for each sidelink transmission.

In the example in FIG. 8, the second and ninth bits in the bitmap information are "1". This means that the second and ninth symbols in the slot are set as symbols for mapping the PSCCH. The terminal device 200 that performs the sidelink transmission maps the PSCCH to the second and ninth symbols in the slot based on the bitmap information illustrated in FIG. 8, and performs two sidelink transmissions in one slot.

Furthermore, here, the terminal device 200 determines the maximum number of symbols to be used for one sidelink transmission based on the bitmap information. Therefore, in the example in FIG. 8, the number of symbols in one entire sidelink transmission is implicitly determined based on the bitmap information.

The example in FIG. 9 illustrates a case where the bitmap information indicates whether or not the PSCCH can be mapped. In other words, the number of symbols for the sidelink transmission is not necessarily limited to the bitmap information, and the terminal device 200 can map, for example, one sidelink transmission beyond the symbol indicated as "1" in the bitmap information. In other words, the terminal device 200 may not necessarily map the PSCCH to the symbol indicated by "1" in the bitmap information.

In the example in FIG. 9, the second, sixth, and tenth symbols in the bitmap information are "1", but the terminal device 200 maps the PSCCH to the second and tenth symbols in the slot, and performs two sidelink transmissions in one slot. In FIG. 9, PSSCH is mapped to the sixth symbol in the slot.

Even in this case, one sidelink transmission may not exceed the slot. In other words, the sidelink transmission may be limited within the slot. Note that one sidelink transmission may exceed the slot.

Furthermore, when the resource pool on the reception side and the resource pool on the transmission side are individually set, the bitmap information may be individually set. In this case, in the resource pool on the transmission side viewed from the Tx UE, the Tx UE may perform the sidelink transmission of mapping the PSCCH to the symbol indicating "1" in the bitmap information.

On the other hand, the Rx UE, which is the resource pool on the reception side viewed from the Rx UE, performs a PSCCH reception process (monitoring) assuming that there is a possibility that the PSCCH is mapped to the symbol indicating "1" in the bitmap information (regardless of whether the PSCCH is actually transmitted).

Here, it has been described that the bitmap information indicates the symbol of the PSCCH, but the present invention is not limited thereto. For example, the bitmap information may indicate an AGC symbol or a head symbol of the sidelink transmission.

The bitmap information can be set semi-static by the base station device 100 or the master UE. In this case, the base station device 100 or the master UE sets the bitmap information through, for example, signaling (e.g., RRC and MACb) in the upper layer as viewed from the physical layer. Alternatively, the base station device 100 or the master UE may perform the setting through signaling (e.g., SCI and DCI) in the physical layer.

Here, the bitmap information has been described as an example of the allocation information, but the allocation information is not limited to the bitmap information. The allocation information may be information regarding allocation of the PSCCH, and may be information indicating a position of the PSCCH (or AGC). For example, in the case of the subslot configuration as illustrated in FIG. 8, the allocation information may be information including "2" and "9" indicating symbols to which the PSCCH is allocated.

Note that, in the following description, the subslot configuration of any one of (1) and (2) described above can be applied unless otherwise specified.

### <3.2. Resource allocation method>

### (1) PSCCH (Sidelink control channel: Channel for transmitting sidelink control information (SCI))

### (1-1) Time domain

A start symbol and the number of symbols of the PSCCH are set and/or defined, respectively. The setting is performed, for example, by the base station device 100 or the master UE using RRC or control information in the physical layer.

### (Number of PSCCH symbols)

For example, a predetermined number of PSCCH symbols (one, two, or three symbols) is set.

Here, in the case of the conventional transmission in units of slots not using subslots, two or three PSCCH symbols can be set. However, the minimum number of symbols in the sidelink transmission is limited by the number of PSCCH symbols. In the present embodiment, since the communication system 1 supports the PSCCH having one symbol, this limitation is eliminated. In particular, in the sidelink communication of the present embodiment using the subslot, since the number of symbols in one sidelink transmission is smaller than that in the conventional sidelink communication, a higher effect can be obtained.

In addition, the number of PSCCH symbols can be set to different numbers depending on whether the conventional sidelink transmission is performed in units of slots or the sidelink transmission is performed in units of subslots according to the present embodiment.

For example, in the case of the conventional sidelink transmission in units of slots, two or three symbols are set. On the other hand, in the case of the sidelink transmission in units of subslots according to the present embodiment, one, two, or three symbols are set.

Further, in the case of the sidelink transmission in units of subslots according to the present embodiment, one PSCCH symbol may be set. In this case, for example, when the base station device 100 or the master UE determines to perform the sidelink communication in units of subslots, one PSCCH symbol may be implicitly determined.

### (PSCCH start symbol)

When the base station device 100 or the master UE explicitly sets the subslot and the AGC is included in the sidelink transmission, a symbol next to the AGC is a PSCCH start symbol. Specifically, for example, a second symbol in the subslot is the PSCCH start symbol.

On the other hand, when the AGC is not included in the sidelink transmission, the first symbol in the subslot is the PSCCH start symbol.

When the base station device 100 or the master UE indicates the position of the PSCCH using the bitmap information, a symbol corresponding to "1" in the bitmap information is the PSCCH start symbol.

On the other hand, when the base station device 100 or the master UE indicates the position of the AGC using the bitmap information, the symbol next to the symbol corresponding to "1" in the bitmap information is the PSCCH start symbol.

### (1-2) Frequency domain

The frequency domain of the PSCCH can be set in predetermined resource units. Examples of the predetermined resource unit include a resource block (= 12 subcarriers), a subchannel (minimum unit in frequency domain of sidelink transmission), and a subcarrier.

A starting frequency resource and frequency bandwidth are set based on the resource unit. For example, the frequency bandwidth in units of the subcarrier and the resource block to be the start is set.

The starting frequency resource is a subcarrier with the smallest index (i.e., lowest frequency) in each subchannel.

For example, a predetermined number of resource blocks (e.g., 10, 15, 20 resource blocks) is set as the frequency bandwidth of the PSCCH. However, the number of resource blocks of the PSCCH may be similarly limited to not greater than the number of resource blocks of the subchannel to which the predetermined number of resource blocks is similarly set. In other words, the frequency resource of the PSCCH is mapped within one subchannel.

Furthermore, for example, the number of resource blocks of the PSCCH may be mapped within one or more predetermined subchannels. As a result, particularly in a case where the subslot communication is performed or in a case where the number of PSCCH symbols is small (e.g., one symbol), restriction on the frequency domain of the transmission resource of the PSCCH is relaxed.

Further, whether or not the number of resource blocks that can be set for the PSCCH is limited to within one subchannel may be different depending on whether the conventional sidelink transmission in units of slots or the sidelink transmission in units of subslots according to the present embodiment is performed.

For example, when the conventional sidelink transmission in units of slots is performed, the resource block that can be set is limited to within one subchannel. On the other hand, when the sidelink transmission in units of subslots according to the present embodiment is performed, the resource block that can be set is mapped over a plurality of subchannels.

### (2) PSSCH (Sidelink shared channel: Channel for transmitting data)

### (2-1) Time domain

A start symbol and the number of symbols of the PSSCH are set and/or defined, respectively. The setting is performed, for example, by the base station device 100 or the master UE using RRC or control information in the physical layer.

### (PSSCH start symbol)

A PSSCH start symbol is the same as the PSCCH start symbol described above.

### (Number of PSSCH symbols)

### (Explicit notification)

The number of PSSCH symbols is explicitly notified by SCI. The number of symbols may be up to the last PSSCH symbol or may include a Guard symbol. As a result, the base station device 100 or the master UE can flexibly determine the number of symbols for each sidelink transmission.

Note that the last symbol indicated by the number of symbols may be limited within the subslot to which the first symbol of the sidelink transmission is mapped.

In addition, the last symbol indicated by the number of symbols may be a subslot next to the subslot to which the first symbol of the sidelink transmission is mapped. In other words, the terminal device 200 may perform the sidelink transmission across the plurality of subslots. Even in this case, the sidelink transmission may be limited within one slot.

### (Implicit determination)

The number of PSSCH symbols is implicitly determined based on the subslot configuration or bitmap information explicitly notified from the base station device 100 or the master UE. As a result, the base station device 100 or the master UE does not need to notify the number of symbols by the SCI, and the overhead of the control information can be reduced.

When the number of symbols is determined by the subslot configuration explicitly notified from the base station device 100 or the master UE, the number of symbols is determined such that the last symbol of the subslot is Guard and the second symbol to the last is the last PSSCH symbol. When there is no Guard symbol in the sidelink transmission, the number of symbols is determined such that the last symbol of the subslot is the last PSSCH symbol.

When the number of symbols is determined by the bitmap information, for example, as illustrated in FIG. 8, the number of PSSCH symbols is determined such that no empty symbol, except for the Guard symbol, exists.

As described above, when the number of PSSCH symbols is determined based on the subslot configuration or the bitmap information explicitly notified, it can be said that the number of PSSCH symbols (allocation of PSSCH) is determined according to the number of symbols to which AGC, PSCCH, and Guard are allocated.

### (2-2) Frequency domain

The frequency domain of the PSSCH is mapped in units of subchannels, but units of other predetermined resources (e.g., resource block or subcarrier) may be used.

A starting frequency resource is the same as the starting frequency resource of the PSCCH. However, in the symbol to which the PSCCH is mapped, the frequency resource to which the PSCCH is not mapped is the start of the PSSCH.

For example, a frequency bandwidth of PSSCH is notified to the terminal device 200, using the SCI or RRC, by the base station device 100 or the master UE as the number of subchannels.

### (3) PSFCH (Sidelink feedback channel: Channel for transmitting HARQ feedback (Ack/Nack) to PSSCH)

### (3-1) Time domain

The sidelink transmission including the PSFCH is determined to be mapped at the end of a predetermined slot. The sidelink transmission including the PSFCH is sidelink transmission in which AGC, PSFCH, and Guard are mapped. Note that this is determined regardless of whether or not the sidelink transmission including the PSFCH performs transmission based on the subslot. The predetermined slot is set by RRC.

Alternatively, it may be determined that the sidelink transmission including the PSFCH is mapped at the end of a predetermined subslot. In this case, for example, the predetermined subslot is set, using RRC, by the base station device 100 or the master UE.

The subslot configuration used for the sidelink transmission including the PSFCH may be different from the subslot configuration used for the sidelink transmission including the PSSCH.

The number of PSFCH symbols is specified in advance to a predetermined number of symbols. Alternatively, the number of symbols of the PSFCH may be set, using the SCI or the RRC, by the base station device 100 or the master UE.

In the conventional sidelink transmission in units of slots, the number of PSFCH symbols is fixed to one, but in the sidelink transmission in units of subslots according to the present embodiment, one or more PSFCH symbols can be set. This increases the amount of information that can be transmitted on the PSFCH. In addition, by setting two or more PSFCH symbols, the terminal device 200 can copy the same PSFCH as in the conventional sidelink transmission in units of slots into a plurality of symbols for transmission. This improves the reliability of the PSFCH.

In addition, the setting (or definition) of the number of PSFCH symbols may be different depending on whether it is the conventional sidelink transmission in units of slots or the sidelink transmission in units of subslots according to the present embodiment.

For example, when the conventional sidelink transmission in units of slots is performed, one PSFCH symbol is preset. On the other hand, when the sidelink transmission in units of subslots according to the present embodiment is performed, the number of PSFCH symbols is set, using the SCI or RRC, by the base station device 100 or the master UE.

### (3-2) Frequency domain

A starting frequency resource is notified by the SCI or the RRC. Alternatively, the starting frequency resource is implicitly determined based on the PSSCH to which the HARQ feedback is performed or resource mapping of the PSSCH.

For example, the frequency resource of the PSFCH to which the HARQ feedback is performed is determined based on the index of the resource block to which the PSSCH is mapped and a predefined formula.

A frequency bandwidth of the PSFCH is defined in advance as, for example, the number of resource blocks. Alternatively, for example, the frequency bandwidth of PSSCH is notified to the terminal device 200 using the SCI or RRC by the base station device 100 or the master UE as the number of resource blocks.

In the conventional sidelink transmission in units of slots, the number of PSFCH resource blocks is fixed to one, but in the sidelink transmission in units of subslots according to the present embodiment, one or more PSFCH resource blocks can be set. This increases the amount of information that can be transmitted on the PSFCH. In addition, by setting two or more PSFCH resource blocks, the terminal device 200 can also copy the same PSFCH as the conventional sidelink transmission in units of slots to a plurality of resource blocks for transmission. This improves the reliability of the PSFCH.

In addition, the setting (or definition) of the number of PSFCH resource blocks may be different depending on whether the conventional sidelink transmission in units of slots or the sidelink transmission in units of subslots according to the present embodiment is performed.

For example, when the conventional sidelink transmission in units of slots is performed, one PSFCH resource block is preset. On the other hand, when the sidelink transmission in units of subslots according to the present embodiment is performed, the number of PSFCH resource blocks is set, using the SCI or RRC, by the base station device 100 or the master UE.

### (4) Resource pool

The resource pool for performing the sidelink transmission in units of subslots according to the present embodiment can be set for the terminal device 200 that performs the sidelink transmission in units of subslots.

In other words, a resource pool dedicated to the sidelink transmission in units of subslots can be set. Alternatively, the same resource pool may be set for the terminal device 200 that performs the conventional sidelink transmission in units of slots and the terminal device 200 that performs the sidelink transmission in units of subslots according to the present embodiment.

A resource pool for reception and a resource pool for transmission can be individually set for a certain terminal device 200. In this case, the above-described parameters, control, and the like are individually set in each resource pool, but some parameters and control may be commonly set for reception and transmission.

Note that the resource allocation described above can be dynamically performed according to the use of resource. For example, when a plurality of resource pools is allocated to the terminal device 200 and some of the resource pools are congested, the terminal device 200 excludes the congested resource pool (i.e., giving priority to other resource pools) and performs the resource allocation.

For example, when the PSFCH resource is implicitly determined based on the PSSCH or the resource mapping of the PSSCH, a plurality of candidate PSFCHs is determined. As a result, the terminal device 200 can dynamically select the resource of the PSFCH according to a resource use state.

### <3.3. HARQ feedback>

As described above, the subslot configuration of the sidelink transmission including the PSFCH can be set separately from the subslot configuration of the sidelink transmission including the PSSCH. For example, the number of symbols in each subslot configuration may be set to be different. Alternatively, for example, the terminal device 200 may use a subslot configuration of seven symbols for the sidelink transmission including PSSCH, and may use a conventional slot configuration for the sidelink transmission including PSFCH.

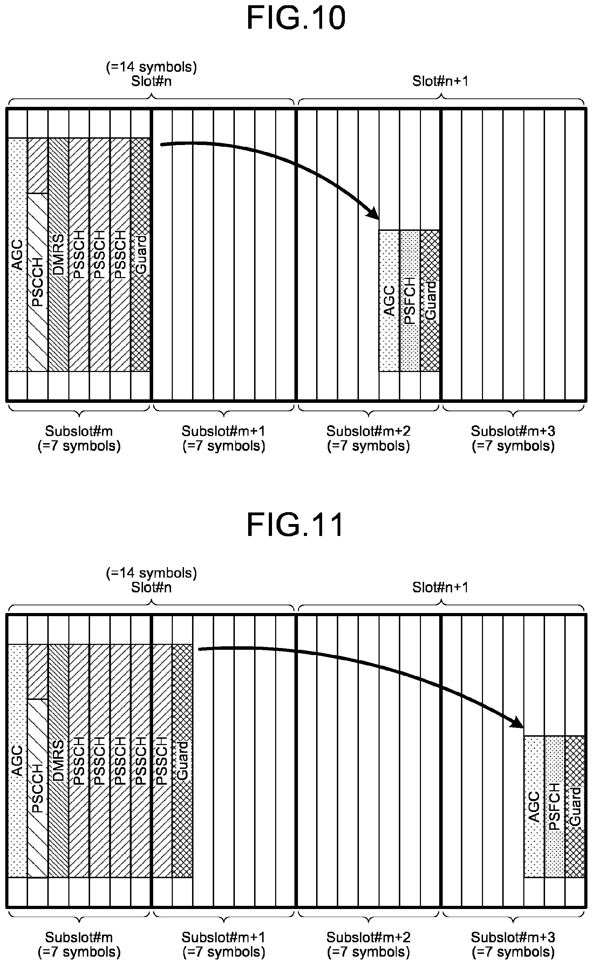

FIGS. 10 and 11 illustrate examples of the HARQ feedback according to the embodiment of the present disclosure. FIGS. 10 and 11 illustrate the examples where the terminal device 200 uses the subslot configuration of seven symbols for the sidelink transmission including the PSFCH. Here, it is assumed that the base station device 100 or the master UE uses the SCI to notify a timing at which the HARQ feedback is performed. At this time, a reference for the timing is determined based on the last symbol of the sidelink transmission including PSSCH. The last symbol may be the PSSCH symbol or the Guard symbol.

In the example illustrated in FIG. 10, the sidelink transmission including the PSSCH is performed in Subslot#m. Here, it is assumed that the base station device 100 or the master UE notifies that the HARQ feedback is transmitted after two subslots through the SCI. In this case, the sidelink transmission including the PSFCH is performed in Subslot#m+2.

In the example illustrated in FIG. 11, the sidelink transmission including PSSCH is performed across two subslots, Subslot#m and Subslot#m+1. Here, it is assumed that the base station device 100 or the master UE notifies that the HARQ feedback is transmitted after two subslots through the SCI. In this case, the sidelink transmission including the PSFCH is performed in Subslot#m+3.

FIGS. 10 and 11 illustrate the examples where the HARQ feedback is transmitted two subslots after the sidelink transmission including the PSSCH, but the subslots in which the PSFCH is transmitted are different.

In this way, when the subslot in which the PSFCH is allocated is implicitly determined based on the subslot in which the last symbol of the sidelink transmission is transmitted, the PSFCH may be transmitted in different subslots. This is because the last symbol of the sidelink transmission including the PSSCH is allocated to different subslots.

By performing the HARQ feedback based on the sidelink communication in units of subslots, it is possible to transmit the HARQ feedback in units of subslots instead of only in units of slots that has been possible. As a result, the delay of the sidelink transmission including the PSFCH can be further shortened.

Here, for example, by transmitting the PSFCH in units of symbols, the delay of the PSFCH can be reduced, but it becomes difficult to share resources for transmitting the PSFCH (time resource and/or frequency resource) with another terminal device 200, and the overhead of transmission of the PSFCH increases. Here, resource sharing includes, for example, sharing using frequency division multiplexing or code division multiplexing.

Therefore, in the embodiment of the present disclosure, the PSFCH is transmitted in units of subslots. At this time, for example, when the base station device 100 sets the number of symbols of the subslot for transmitting the PSFCH, the base station device 100 can flexibly determine the balance between delay reduction and the overhead of the transmission of the PSFCH.

### <3.4. Sharing sensing information>

In the sidelink communication, the PSCCH is used for notification of scheduling information for the terminal device 200 that receives the PSSCH, and for other terminal devices 200 to identify (sense) the resource use state of the PSSCH. In other words, the PSCCH is received by all the terminal devices 200 that perform the sidelink transmission.

The terminal device 200 performs sensing of the PSCCH, and thus, for example, other terminal devices 200 can identify the resource use state with respect to periodic data transmission when the terminal device 200 in the same resource pool performs data transmission with periodic data traffic.

Further, in the PSCCH, in addition to notifying the scheduling information with respect to the PSSCH in the same slot, resource reservation information of the next PSSCH (e.g., after 100 ms) can be transmitted. With this resource reservation information, other terminal devices 200 can identify the resource use state even for aperiodic data traffic.

As described above, in the conventional sidelink communication, a transmitting terminal device 200 performs sensing and identifies the resource use state in the resource pool. The transmitting terminal device 200 selects a resource to be used for the sidelink transmission based on the information identified. As a result, occurrence of collision of data (i.e., PSSCH) with another terminal device 200 is reduced.

However, when the sidelink transmission is extended as in the present embodiment, in particular when the PSCCH configuration or the like is extended, it is difficult for the terminal device 200 that does not perform the subslot communication as in the conventional terminal device 200 to receive an extended PSCCH.

Therefore, in the present embodiment, for the terminal device 200 that does not support the sidelink communication in units of subslots (hereinafter also referred to as subslot communication), the resource use state (reservation state) used in the subslot communication is separately notified as assist information.

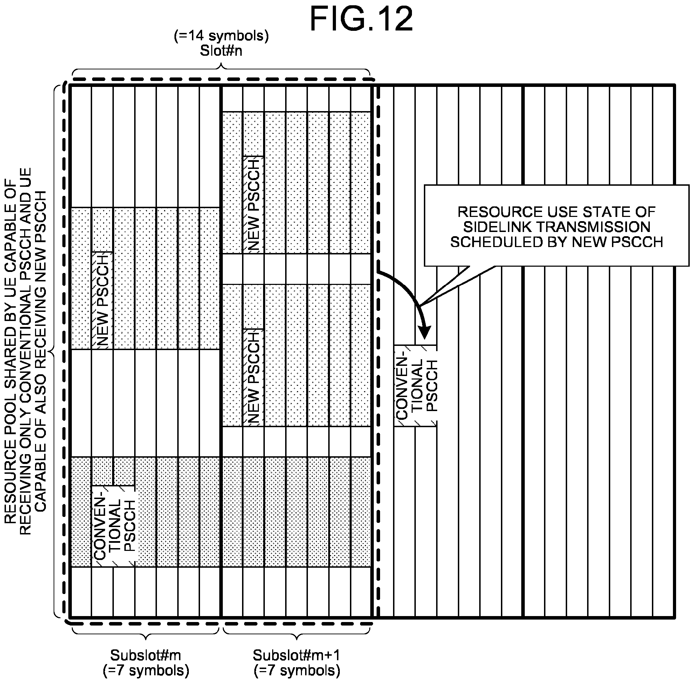

FIG. 12 is a diagram illustrating an example of a method of notifying the assist information according to the embodiment of the present disclosure.

For example, the base station device 100 or a predetermined terminal device 200 (e.g., Rx UE, master UE, or the like) notifies the assist information regarding the resource use state (reservation state) notified in a previous slot through the PSCCH of the next or subsequent slot. Note that the assist information regarding the resource use state in the subslot communication may be the use state itself or may be information regarding resources available based on the use state. The assist information is notified by the conventional PSCCH.

In the example in FIG. 12, the resource use state of the sidelink transmission scheduled (notified) by new PSCCH of Slot#n is notified by using the conventional PSCCH in next Slot#n+1. The new PSCCH means a PSCCH included in the sidelink transmission performed in units of subslots.

Furthermore, the resource pool illustrated in FIG. 12 is a resource pool shared by the UE (terminal device 200) capable of receiving the conventional PSCCH and the UE (terminal device 200) capable of also receiving the new PSCCH in addition to the conventional PSCCH. In other words, the resource pool illustrated in FIG. 12 is used by both the terminal device 200 that performs the sidelink communication in units of slots and the terminal device 200 that performs the sidelink communication in units of subslots.

### <3.5. Sensing method>

As described above, in the sidelink communication, the terminal device 200 on the transmission side performs sensing to reduce data collision. Conventional sensing has been performed in units of slots in the time domain. In this case, the terminal device 200 also selects resources to be used for transmission in units of slots.

Therefore, in the conventional sensing method, even when some subslots in a certain slot are available, resources of these subslots cannot be used when other subslots in the same slot are not available. This may lead to a loss of transmission opportunities, an increase in latency, and a decrease in resource utilization efficiency.

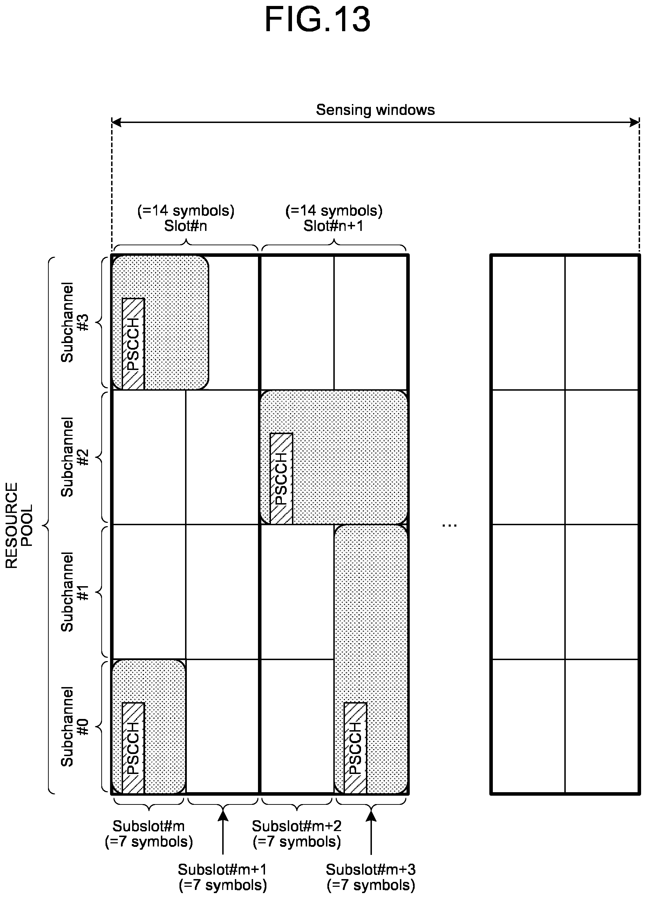

Therefore, in the present embodiment, when some subslots in the slot are available, these subslots are made available. Specifically, the terminal device 200 performs sensing in resource units of the subslot and the subchannel. Hereinafter, an example of a specific sensing method will be described with reference to FIG. 13. FIG. 13 is a diagram illustrating an example of the sensing method according to the embodiment of the present disclosure.

The terminal device 200 determines a sensing window based on the control information configured (or preconfigured) from the base station. The determination can be flexibly performed by the terminal device 200 within a range indicated by the control information. For example, the terminal device 200 can change a window width according to a data delay requirement.

Specifically, the terminal device 200 determines a first slot and a last slot in which sensing is performed as the sensing window. Here, even when sensing is performed based on the subslot communication, the sensing window can be limited to be determined in units of slots. Note that the sensing window may also be determined in units of subslots.

The terminal device 200 performs sensing of each of resources configured by one subchannel and one subslot within the sensing window determined. The sensing here includes, as described above, identification of the resource use state according to the scheduling information obtained from the PSCCH transmitted by another terminal device 200. Furthermore, the sensing here also includes identification of the resource use state according to received power (e.g., reference signals received power (RSRP)) of the resource. In this case, the terminal device 200 measures the received power of the resource, and when the received power equal to or greater than a predetermined threshold is detected, the resource is identified as being used.

Here, description will be given focusing on the first two slots in the sensing window illustrated in FIG. 13. In this example, it is assumed that the sidelink transmission as illustrated in FIG. 13 is performed among resources in four subchannels and four subslots. Note that one slot includes two subslots.

Here, when even a part of resource is used in the sidelink transmission, the terminal device 200 determines that the resource is used. Therefore, the sidelink transmission transmitted through Subchannel#3 in FIG. 13 is transmitted by using a part of resource of Subslot#m+1 in addition to Subslot#m. In this case, the terminal device 200 recognizes that the resources of Subslot#m and Subslot#m+1 of Subchannel#3 are used.

The terminal device 200 selects a resource to be used for the sidelink transmission from resources other than the resource recognized as being used (i.e., resource configured by one subchannel and one subslot as a unit).

Furthermore, sensing based on the subslot communication may be performed under a predetermined condition. The predetermined condition is any one of the following conditions or a combination thereof.

. Sensing based on subslot communication is explicitly set. The setting related to this sensing may be notified to the terminal device 200 separately from the setting for performing subslot-based sidelink transmission.

. Subslot-based sidelink transmission is set In other words, when the sidelink communication is set, the terminal device 200 implicitly performs sensing based on the subslot communication.

• Resource pool performing sensing is dedicated to a terminal device that performs subslot-based sidelink transmission. Note that information for recognizing whether or not the resource pool is dedicated to the terminal device can be notified from the base station device 100 to the terminal device 200. In this case, when a predetermined resource pool (performing sensing) is not dedicated to the terminal device that performs the subslot-based sidelink transmission, the terminal device 200 may perform the sensing based on the conventional slot.

Furthermore, the subslot configuration used in the actual sidelink transmission and the subslot configuration for performing sensing may be different. In this case, the configuration of each subslot can be individually set. Note that even when the actual sidelink transmission is performed based on the subslot, sensing may be performed based on the conventional slot. Furthermore, even when the actual sidelink transmission is performed based on the conventional slot, sensing may be performed based on the subslot.

Furthermore, when the sensing based on the subslot communication is performed, the sensing unit in the frequency domain may be changed to a unit different from the conventional unit. For example, when performing sensing based on the subslot communication, the terminal device 200 can use two consecutive subchannels as one sensing unit. Furthermore, the size of the subchannel (i.e., number of resource blocks configuring one subchannel) can be set independently for each sidelink transmission and sensing.

### <<4. Summary>>

It is also possible to create a computer program for causing hardware such as a CPU, a ROM, and a RAM incorporated in each device of the present specification to exhibit a function equivalent to the configuration of each device described above. Furthermore, a storage medium storing the computer program can also be provided. Furthermore, by configuring each functional block illustrated in the functional block diagram by hardware, a series of processing can be realized by hardware.

Although the preferred embodiment of the present disclosure has been described in detail with reference to the accompanying drawings, the technical scope of the present disclosure is not limited to these examples. It is obvious that a person having ordinary knowledge in the technical field of the present disclosure can conceive various changes or modifications within the scope of the technical idea described in the claims, and it is naturally understood that these also belong to the technical scope of the present disclosure.

Furthermore, the effects described in the present specification are merely illustrative or exemplary, and are not restrictive. In other words, the technology according to the present disclosure can exhibit other effects obvious to those skilled in the art from the description of the present specification in addition to or instead of the above effects.

The present technology can also have the following configurations.
(1) A terminal device that performs sidelink communication with another terminal device, the terminal device comprising a control unit configured to:
   acquire resource pool information regarding a resource pool allocated, by a base station device, for the sidelink communication with the another terminal device, and
   transmit control information to the another terminal device by using at least a sidelink control channel among a plurality of sidelink control channels allocated to a slot in a time axis direction, the slot being included in the resource pool.
(2) The terminal device according to (1), wherein
   the control unit:
   acquires allocation information regarding allocation of the sidelink control channel, and
   transmits the control information by using the sidelink control channel allocated based on the allocation information.
(3) The terminal device according to (2), in which the allocation information includes information regarding a symbol to which the sidelink control channel is allocated.
(4) The terminal device according to (2), in which the allocation information includes information regarding a symbol to which automatic gain control (AGC) is allocated.
(5) The terminal device according to (1), wherein the sidelink control channel is allocated to each subslot set in the slot.
(6) The terminal device according to any one of (1) to (5), wherein a number of symbols in the sidelink control channel is one or more.
(7) The terminal device according to (6), in which the number of symbols to which the sidelink control channel can be allocated differs according to the number of the sidelink control channels allocated to the slot in the time axis direction.
(8) The terminal device according to (7),
   in which the number of symbols of the sidelink control channel is two or more when one sidelink control channel is allocated to the slot in the time axis direction, and
   the number of symbols of the sidelink control channel is one or more when a plurality of sidelink control channels is allocated to the slot in the time axis direction.
(9) The terminal device according to any one of (5) to (8),
   in which the number of symbols in the sidelink control channel is one when the plurality of sidelink control channels are allocated in the time axis direction.
(10) The terminal device according to any one of (1) to (9), wherein a number of subchannels to which a number of resource blocks that can be configured as the sidelink control channel is mapped differs according to the number of the sidelink control channels allocated to the slot in the time axis direction.
(11) The terminal device according to (10),
   in which when one sidelink control channel is allocated to the slot in the time axis direction, the number of resource blocks that can be configured as the sidelink control channel is mapped to one subchannel, and
   when the plurality of sidelink control channels is allocated to the slot in the time axis direction, the number of resource blocks that can be configured as the sidelink control channels is mapped to a plurality of consecutive subchannels.
(12) The terminal device according to any one of (1) to (11), wherein a sidelink shared channel is allocated according to a symbol allocated with the sidelink control channel.
(13) The terminal device according to any one of (1) to (12), wherein at least one of a number of symbols and a number of resource blocks set as a sidelink feedback channel differs according to a number of the sidelink control channels allocated to the slot in the time axis direction.
(14) The terminal device according to any one of (1) to (13), wherein a channel configuration of a transmission unit including a sidelink shared channel is different from a channel configuration of a transmission unit including a sidelink feedback channel.
(15) The terminal device according to any one of (1) to (14), wherein the control unit acquires timing information regarding a timing to perform a hybrid automatic repeat request (HARQ) feedback.
(17) The terminal device according to any one of (1) to (16), wherein
   the control unit receives second control information,
   the second control information includes information regarding the control information transmitted by using at least the sidelink control channel among the plurality of the sidelink control channels allocated to the slot in the time axis direction, the slot being transmitted before a predetermined slot, and
   the second control information is transmitted using the sidelink control channel allocated to the slot in the time axis direction.
(18) The terminal device according to any one of (1) to (17), wherein the control unit performs sensing according to a sensing window in a unit of a plurality of subslots included in the slot.
(19) The terminal device according to (18), wherein the control unit performs the sensing according to the sensing window in a unit of the slot allocated with the plurality of sidelink control channels.
(20) The terminal device according to (18) or (19), wherein the control unit determines that a subslot is used when at least a part of the subslot is used among the plurality of subslots included in the slot.
(21) The terminal device according to (20), in which the control unit performs the sensing for determining whether or not the subslot is used when a predetermined condition is satisfied.
(22) The terminal device according to (21), in which the predetermined condition includes at least one of setting to perform the sensing for determining whether or not the subslot is used, setting to perform the sidelink communication using the subslot, and allocation of the resource for performing the sensing so as to perform the sidelink communication using the subslot.
(23) The terminal device according to any one of (19) to (22), in which a configuration of the subslot in which the control unit performs the sensing is different from a configuration of the subslot used for transmission by the control unit.
(24) A terminal device that performs sidelink communication with another terminal device, the terminal device comprising a control unit configured to:
   acquire resource pool information regarding a resource pool allocated, by a base station device, for the sidelink communication with the another terminal device, and
   receive control information transmitted by at least one of a plurality of sidelink control channels allocated to a slot in a time axis direction, the slot being included in the resource pool.
(25) A base station device that controls sidelink communication by a terminal device, the base station device comprising a control unit configured to:
   transmit resource pool information to the terminal device, the resource pool information regarding a resource pool used by the terminal device for the sidelink communication, and
   transmit, to the terminal device, information regarding allocation of a plurality of sidelink control channels allocated to a slot in a time axis direction, the slot being included in the resource pool.
(26) A communication method of sidelink communication with a terminal device, the communication method comprising:
   acquiring resource pool information regarding a resource pool allocated, by a base station device, for the sidelink communication with the terminal device; and
   transmitting control information to the terminal device by using at least one of a plurality of sidelink control channels allocated to a slot in a time axis direction, the slot being included in the resource pool. Reference Signs List

100 BASE STATION DEVICE
200 TERMINAL DEVICE
110, 210 ANTENNA UNIT
120, 220 WIRELESS COMMUNICATION UNIT
130 NETWORK COMMUNICATION UNIT
140, 230 STORAGE UNIT
150, 240 CONTROL UNIT

## Claims

1. A terminal device that performs sidelink communication with another terminal device, the terminal device comprising a control unit configured to:
acquire resource pool information regarding a resource pool allocated, by a base station device, for the sidelink communication with the another terminal device, and
transmit control information to the another terminal device by using at least a sidelink control channel among a plurality of sidelink control channels allocated to a slot in a time axis direction, the slot being included in the resource pool.

2. The terminal device according to claim 1, wherein
the control unit:
acquires allocation information regarding allocation of the sidelink control channel, and
transmits the control information by using the sidelink control channel allocated based on the allocation information.

3. The terminal device according to claim 1, wherein the sidelink control channel is allocated to each subslot set in the slot.

4. The terminal device according to claim 1, wherein a number of symbols in the sidelink control channel is one or more.

5. The terminal device according to claim 4, wherein the number of symbols in the sidelink control channel differs according to a number of the sidelink control channels allocated to the slot in the time axis direction.

6. The terminal device according to claim 5, wherein a number of subchannels to which a number of resource blocks set as the sidelink control channel is mapped differs according to the number of the sidelink control channels allocated to the slot in the time axis direction.

7. The terminal device according to claim 1, wherein a sidelink shared channel is allocated according to a symbol allocated with the sidelink control channel.

8. The terminal device according to claim 1, wherein at least one of a number of symbols and a number of resource blocks set as a sidelink feedback channel differs according to a number of the sidelink control channels allocated to the slot in the time axis direction.

9. The terminal device according to claim 1, wherein a channel configuration of a transmission unit including a sidelink shared channel is different from a channel configuration of a transmission unit including a sidelink feedback channel.

10. The terminal device according to claim 1, wherein the control unit acquires timing information regarding a timing to perform a hybrid automatic repeat request (HARQ) feedback.

11. The terminal device according to claim 1, wherein
the control unit receives second control information,
the second control information includes information regarding the control information transmitted by using at least the sidelink control channel among the plurality of the sidelink control channels allocated to the slot in the time axis direction, the slot being transmitted before a predetermined slot, and
the second control information is transmitted using the sidelink control channel allocated to the slot in the time axis direction.

12. The terminal device according to claim 1, wherein the control unit performs sensing according to a sensing window in a unit of a plurality of subslots included in the slot.

13. The terminal device according to claim 12, wherein the control unit performs the sensing according to the sensing window in a unit of the slot allocated with the plurality of sidelink control channels.

14. The terminal device according to claim 13, wherein the control unit determines that a subslot is used when at least a part of the subslot is used among the plurality of subslots included in the slot.

15. A terminal device that performs sidelink communication with another terminal device, the terminal device comprising a control unit configured to:
acquire resource pool information regarding a resource pool allocated, by a base station device, for the sidelink communication with the another terminal device, and
receive control information transmitted by at least one of a plurality of sidelink control channels allocated to a slot in a time axis direction, the slot being included in the resource pool.

16. A base station device that controls sidelink communication by a terminal device, the base station device comprising a control unit configured to:
transmit resource pool information to the terminal device, the resource pool information regarding a resource pool used by the terminal device for the sidelink communication, and
transmit, to the terminal device, information regarding allocation of a plurality of sidelink control channels allocated to a slot in a time axis direction, the slot being included in the resource pool.

17. A communication method of sidelink communication with a terminal device, the communication method comprising:
acquiring resource pool information regarding a resource pool allocated, by a base station device, for the sidelink communication with the terminal device; and
transmitting control information to the terminal device by using at least one of a plurality of sidelink control channels allocated to a slot in a time axis direction, the slot being included in the resource pool.
